(19) Europäisches Patentamt
European Patent Office
Office européen des brevets

(11) EP 3 349 275 A1

(12) EUROPEAN PATENT APPLICATION
published in accordance with Art. 153(4) EPC

(43) Date of publication:
**18.07.2018 Bulletin 2018/29**

(21) Application number: **16853658.9**

(22) Date of filing: **05.10.2016**

(51) Int Cl.:
***H01M 4/131*** *(2010.01)* ***H01M 4/525*** *(2010.01)*
***H01M 4/62*** *(2006.01)*

(86) International application number:
**PCT/JP2016/079694**

(87) International publication number:
**WO 2017/061504 (13.04.2017 Gazette 2017/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.10.2015 JP 2015197657**

(71) Applicant: **Hitachi Chemical Co., Ltd.**
**Chiyoda-ku**
**Tokyo 100-6606 (JP)**

(72) Inventors:
- **KUZUOKA, Hiroki**
  **Tokyo 100-6606 (JP)**
- **SUZUKI, Kenji**
  **Tokyo 100-6606 (JP)**
- **NAGAI, Shunsuke**
  **Tokyo 100-6606 (JP)**
- **HABA, Eisuke**
  **Tokyo 100-6606 (JP)**

(74) Representative: **Hoffmann Eitle**
**Patent- und Rechtsanwälte PartmbB**
**Arabellastraße 30**
**81925 München (DE)**

# (54) RESIN FOR ENERGY DEVICE ELECTRODE, COMPOSITION FOR FORMING ENERGY DEVICE ELECTRODE, POSITIVE ELECTRODE FOR ENERGY DEVICE, AND ENERGY DEVICE

(57) A composition for forming an energy device electrode contains a positive electrode active material containing a lithium-containing metal composite oxide containing lithium and nickel in which a content ratio of nickel with respect to metals other than lithium is 50% by mole or more and a resin for an energy device electrode containing a structural unit derived from a nitrile group-containing monomer.



Printed by Jouve, 75001 PARIS (FR)

## Description

Technical Field

The present invention relates to a resin for an energy device electrode, a composition for forming an energy device electrode, a positive electrode for an energy device, and an energy device.

Background Art

Lithium ion secondary batteries, which are nonaqueous electrolytic solution-based energy devices having a high energy density, are widely used as power sources for portable information terminals such as notebook computers, mobile phones, or PDAs (Personal Digital Assistants).

In lithium ion secondary batteries, carbon materials having multilayer structures capable of intercalating lithium ions thereinto (formation of lithium intercalation compounds) and releasing lithium ions therefrom are mainly used as negative electrode active materials. As positive electrode active materials, lithium-containing metal composite oxides are mainly used. Electrodes of lithium ion secondary batteries are prepared by kneading these active materials, binder resins, solvents (N-methyl-2-pyrrolidone, water, or the like) or the like to prepare slurries, coating the slurries on one side or both sides of metal foils which are current collectors with transfer rolls or the like, removing the solvent by drying to form mixture layers, and compression-molding with roll press machines or the like.

As the lithium-containing metal composite oxides, lithium cobalt oxides ($LiCoO_2$), lithium manganates ($LiMn_2O_4$), lithium nickel manganese cobalt oxides ($LiNi_{1/3}Mn_{1/3}Co_{1/3}O_2$), lithium iron phosphates ($LiFePO_4$), or the like are usually used, and they may be used singly or in combination of two or more kinds thereof depending on the purpose.

As binder resins, polyvinylidene difluorides (hereinafter referred to as PVDF) are usually used from the viewpoints of electrochemical stability, resistance to dissolution into electrolytic solutions, and the like.

In recent years, further increase in energy density of a lithium ion secondary battery is demanded, and a positive electrode active material having a large capacity density has been proposed. As such an active material, lithium nickel manganese cobalt oxide, lithium nickel cobalt aluminate, or the like in which the proportion of nickel is increased has been proposed (see, for example, Patent Document 1).

Alkali metal hydroxides (basic substance) such as LiOH which is used when producing lithium-containing metal composite oxides may remain in the lithium-containing metal composite oxides having an increased proportion of nickel. On the other hand, PVDF usually used as a binder resin is known to be denatured by an elimination reaction of HF when in contact with a basic substance (for example, see Non-Patent Document 1). Usually, positive electrodes for nonaqueous electrolytic solution-based energy devices are prepared by coating positive electrode slurries containing lithium-containing metal composite oxides and PVDF on current collectors. However, when moisture is mixed in the positive electrode slurries, the positive electrode slurries become basic. This is considered to be because alkali metal hydroxides such as LiOH contained in the lithium-containing metal composite oxides elute into solvents containing water. When the positive electrode slurries exhibit basicity, PVDF may be denatured. As the PVDF is denatured, the positive electrode slurries tend to gel.

Therefore, as a method of manufacturing a positive electrode active material capable of preventing gelling of a positive electrode slurry, a method of manufacturing a positive electrode active material including a specific layered compound, the method being characterized in that, when a synthesized positive electrode active material powder is stirred and mixed in pure water and the pH of a supernatant obtained after standing is measured, only a positive electrode active material in which the pH is in a specific range is selected is disclosed (see, for example, Patent Document 2).

RELATED ART DOCUMENTS

Patent Documents

Patent Document 1 Japanese Patent Application Laid-Open (JP-A) No. 2008-235147
Patent Document 2 Japanese Patent No. 4951823

Non Patent Document

Non Patent Document 1 Various analyses of electrode binder, The TRC News No. 117 (Sep. 2013)

SUMMARY OF INVENTION

Technical Problem

However, with the technique described in Patent Document 2, there is a possibility that the capacity density is lowered or the cycle characteristics are deteriorated. Therefore, it may be undesirable to modify a method of manufacturing a positive electrode active material, and it is desired to use a positive electrode active material obtained by a conventional manufacturing method.
The invention has been made in view of the above circumstances, and an object of the invention is to provide a resin for an energy device electrode in which gelation of a slurry is suppressed when a nickel-rich lithium-containing metal composite oxide is used as a positive electrode active material, and a composition for forming an energy device electrode, a positive electrode for an energy device, and an energy device using the same. Solution to Problem
The invention relates to the following.

<1> A composition for forming an energy device electrode, the composition comprising:

a positive electrode active material comprising a lithium-containing metal composite oxide comprising lithium and nickel in which a content ratio of nickel with respect to metals other than lithium is 50% by mole or more; and a resin for an energy device electrode comprising a structural unit derived from a nitrile group-containing monomer.

<2> The composition for forming an energy device electrode according to <1>, wherein the lithium-containing metal composite oxide comprises a compound represented by the following Formula (I):

$$Li_aNi_bCo_cM_dO_{2+e} \quad \text{Formula (I)}$$

wherein, in Formula (I), M is at least one selected from the group consisting of Al, Mn, Mg, and Ca, and a, b, c, d, and e satisfy $0.2 \leq a \leq 1.2$, $0.5 \leq b \leq 0.9$, $0.1 \leq c \leq 0.4$, $0 \leq d \leq 0.2$, $-0.2 \leq e \leq 0.2$, andb + c + d = 1.
<3> The composition for forming an energy device electrode according to <1> or <2>, wherein the resin for an energy device electrode further comprises a structural unit derived from a monomer represented by the following Formula (II):

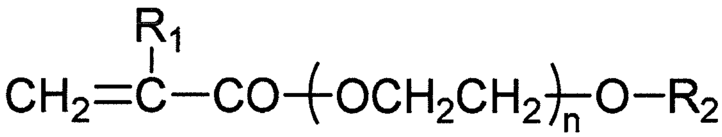
Formula (II)

wherein, in Formula (II), $R_1$ represents a hydrogen atom or a methyl group, $R_2$ represents a hydrogen atom or a monovalent hydrocarbon group, and n represents an integer from 1 to 50.
<4> The composition for forming an energy device electrode according to <3>, wherein a ratio of structural units derived from the monomer represented by the above-described Formula (II) with respect to 1 mole of the structural unit derived from the nitrile group-containing monomer contained in the resin for an energy device electrode is from 0.001 moles to 0.2 moles.
<5> The composition for forming an energy device electrode according to any one of <1> to <4>, wherein the resin for an energy device electrode further comprises a structural unit derived from a monomer represented by the following Formula (III):

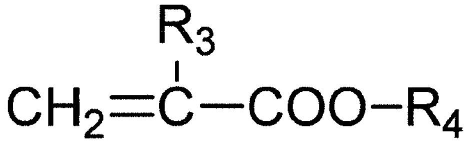
Formula (III)

wherein, in Formula (III), $R_3$ represents a hydrogen atom or a methyl group, and $R_4$ represents an alkyl group having from 4 to 30 carbon atoms.
<6> The composition for forming an energy device electrode according to <5>, wherein a ratio of structural units derived from the monomer represented by the above-described Formula (III) with respect to 1 mole of the structural

unit derived from the nitrile group-containing monomer contained in the resin for an energy device electrode is from 0.001 moles to 0.2 moles.

<7> The composition for forming an energy device electrode according to any one of <1> to <6>, wherein the nitrile group-containing monomer comprises acrylonitrile.

<8> A positive electrode for an energy device, comprising:

a positive electrode current collector; and

a positive electrode mixture layer provided on at least one surface of the positive electrode current collector and comprising the composition for forming an energy device electrode according to any one of <1> to <7>.

<9> An energy device comprising the positive electrode for an energy device according to <8>.

<10> The energy device according to <9>, wherein the energy device is a lithium ion secondary battery.

<11> A resin for an energy device electrode comprising a structural unit derived from a nitrile group-containing monomer, and used for forming a positive electrode mixture layer comprising a positive electrode active material comprising a lithium-containing metal composite oxide comprising lithium and nickel in which a content ratio of nickel with respect to metals other than lithium is 50% by mole or more.

<12> The resin for an energy device electrode according to <11>, wherein the lithium-containing metal composite oxide comprises a compound represented by the following Formula (I):

$$Li_aNi_bCo_cM_dO_{2+e} \qquad \text{Formula (I)}$$

wherein, in Formula (I), M is at least one selected from the group consisting of Al, Mn, Mg, and Ca, and a, b, c, d, and e satisfy $0.2 \le a \le 1.2$, $0.5 \le b \le 0.9$, $0.1 \le c \le 0.4$, $0 \le d \le 0.2$, $-0.2 \le e \le 0.2$, and $b + c + d = 1$.

<13> The resin for an energy device electrode according to <11> or <12>, further comprising a structural unit derived from a monomer represented by the following Formula (II):

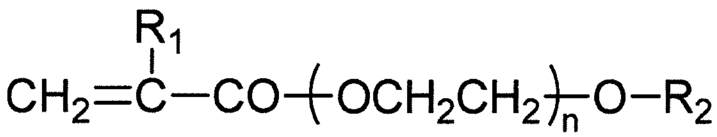

Formula (II)

wherein, in Formula (II), $R_1$ represents a hydrogen atom or a methyl group, $R_2$ represents a hydrogen atom or a monovalent hydrocarbon group, and n represents an integer from 1 to 50.

<14> The resin for an energy device electrode according to <13>, wherein a ratio of structural units derived from the monomer represented by the above-described Formula (II) with respect to 1 mole of the structural unit derived from the nitrile group-containing monomer is from 0.001 moles to 0.2 moles.

<15> The resin for an energy device electrode according to any one of <11> to <14>, further comprising a structural unit derived from a monomer represented by the following Formula (III):

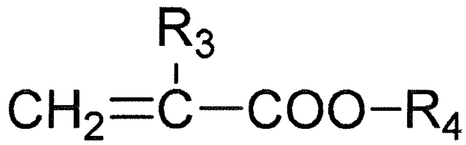

Formula (III)

wherein, in Formula (III), $R_3$ represents a hydrogen atom or a methyl group, and $R_4$ represents an alkyl group having from 4 to 30 carbon atoms.

<16> The resin for an energy device electrode according to <15>, wherein a ratio of structural units derived from the monomer represented by the above-described Formula (III) with respect to 1 mole of the structural unit derived from the nitrile group-containing monomer is from 0.001 moles to 0.2 moles.

<17> The resin for an energy device electrode according to any one of <11> to <16>, wherein the nitrile group-containing monomer comprises acrylonitrile.

Advantageous Effects of Invention

According to the invention, a resin for an energy device electrode in which gelation of a slurry is suppressed when a nickel-rich lithium-containing metal composite oxide is used as a positive electrode active material, and a composition for forming an energy device electrode, a positive electrode for an energy device, and an energy device using the same are provided.

DESCRIPTION OF EMBODIMENTS

Preferred embodiments of the invention will be described below. Matters other than those specifically mentioned herein and necessary for implementing the invention can be grasped as design items of a person skilled in the art based on Prior Art in the field of energy devices. The invention can be implemented based on the contents disclosed herein and technical common knowledge in the field of energy devices.

Herein, the term "process" includes a process in which the purpose of the process can be achieved although the process is unable to be clearly distinguished from other processes in addition to a process independent from other processes.

Herein, a numerical range indicated by using "to" includes numerical values described before and after "to" as the minimum value and the maximum value, respectively.

Within stepwise numerical ranges described herein, the upper limit value or the lower limit value described in one numerical range may be replaced with the upper limit value or the lower limit value of another stepwise numerical range.

In the numerical range described herein, the upper limit value or the lower limit value of the numerical value range may be replaced with values illustrated in Examples.

Herein, unless otherwise specified, the content of each component in a composition means the total content of a plurality of kinds of substances present in the composition when the plurality of kinds of substances corresponding to each component exist in the composition.

Herein, unless otherwise specified, the particle size of each component in a composition means a value for a mixture of a plurality of kinds of particles present in the composition when the plurality of kinds of particles corresponding to each component exist in the composition.

Herein, the term "layer" or "film" includes, when observing a region where a layer or film is present, a case in which the layer or the film is formed only on a part of the region in addition to a case in which the layer or the film is formed on the entirety of the region.

Herein, "(meth)acryl" means at least one of acryl or methacryl, and "(meth)acrylate" means at least one of acrylate or methacrylate.

< Resin for an Energy Device Electrode >

The resin for an energy device electrode of the disclosure contains a structural unit derived from a nitrile group-containing monomer and is used for forming a positive electrode mixture layer containing a positive electrode active material including a lithium-containing metal composite oxide including lithium and nickel in which a content ratio of nickel with respect to metals other than lithium is 50% by mole or more.

When the resin for an energy device electrode of the disclosure is used for forming a positive electrode mixture layer containing a positive electrode active material including a lithium-containing metal composite oxide including lithium and nickel in which a content ratio of nickel with respect to metals other than lithium is 50% by mole or more, gelation of a slurry is suppressed. The reason is not clear, but is presumed as follows.

PVDF tends to be denatured by elimination reaction of HF when PVDF comes in contact with a basic substance such as LiOH. Therefore, when a mixture layer is formed using PVDF, a slurry containing PVDF tends to gel. In particular, when a positive electrode active material including a lithium-containing metal composite oxide including lithium and nickel in which a content ratio of nickel with respect to metals other than lithium is 50% by mole or more is used, a slurry tends to gel.

A nitrile group contained in the resin for an energy device electrode of the disclosure is less likely to cause an elimination reaction when brought into contact with a basic substance as compared with a fluorine atom, and is less likely to be denatured. Therefore, in particular, even when a positive electrode active material containing a lithium-containing metal composite oxide including lithium and nickel in which a content ratio of nickel with respect to metals other than lithium is 50% by mole or more is used, it is presumed that the slurry is difficult to gel.

Herein, the term "binder resin" refers to a resin having a function of bonding particles such as an active material to each other.

Hereinafter, components constituting the resin for an energy device electrode of the disclosure will be described in detail. The positive electrode active material will be described below. The resin for an energy device electrode of the disclosure can be used as a binder resin for an energy device electrode.

- Nitrile Group-Containing Monomer -

The nitrile group-containing monomer used in the disclosure is not particularly limited. Examples of the nitrile group-containing monomer include: an acrylic nitrile group-containing monomer such as acrylonitrile or methacrylonitrile; a cyanic nitrile group-containing monomer such as $\alpha$-cyanoacrylate or dicyanovinylidene; and a fumaric nitrile group-containing monomer such as fumaronitrile.

Among these, from the viewpoints of ease of polymerization, cost performance, plasticity, flexibility, oxidation resistance, swelling resistance to an electrolytic solution, or the like of electrodes, acrylonitrile is preferable. The ratio of acrylonitrile in a nitrile group-containing monomer is, for example, preferably from 5% by mass to 100% by mass, more preferably from 50% by mass to 100% by mass, and still more preferably from 70% by mass to 100% by mass. These nitrile group-containing monomers may be used singly, or in combination of two or more kinds thereof.

When acrylonitrile and methacrylonitrile are used in combination as the nitrile group-containing monomer, the content of acrylonitrile is, for example, preferably from 5% by mass to 95% by mass, and more preferably 50% by mass to 95% by mass, based on the total amount of the nitrile group-containing monomer.

- Monomer Represented by Formula (II) -

From the viewpoint of plasticity of electrodes, it is preferable that the resin for an energy device electrode of the disclosure further include a structural unit derived from a monomer represented by Formula (II).

$$CH_2{=}\overset{R_1}{\overset{|}{C}}{-}CO{-}\!\left(OCH_2CH_2\right)_n\!{-}O{-}R_2 \qquad \text{Formula (II)}$$

Here, $R_1$ represents a hydrogen atom or a methyl group.

n represents an integer from 1 to 50, preferably an integer from 2 to 30, and more preferably an integer from 2 to 10.

$R_2$ represents a hydrogen atom or a monovalent hydrocarbon group, for example, preferably a monovalent hydrocarbon group having from 1 to 30 carbon atoms, more preferably a monovalent hydrocarbon group having from 1 to 25 carbon atoms, and still more preferably a monovalent hydrocarbon group having from 1 to 12 carbon atoms. When the monovalent hydrocarbon group includes a substituent, the number of carbon atoms contained in the substituent is not included in the number of carbon atoms of the monovalent hydrocarbon group.

When $R_2$ is a hydrogen atom or a monovalent hydrocarbon group having from 1 to 30 carbon atoms, there is a tendency to obtain sufficient resistance to swelling to an electrolytic solution. Here, examples of the monovalent hydrocarbon group include an alkyl group and a phenyl group. $R_2$ is preferably an alkyl group having from 1 to 12 carbon atoms or a phenyl group. The alkyl group may be linear, branched, or cyclic.

A part of hydrogen atoms in the alkyl group and the phenyl group represented by $R_2$ may be substituted with a substituent. Examples of the substituent when $R_2$ is an alkyl group include a halogen atom such as a fluorine atom, a chlorine atom, a bromine atom, or an iodine atom, a substituent containing a nitrogen atom, a substituent containing a phosphorus atom, and an aromatic ring. Examples of the substituent when $R_2$ is a phenyl group include a halogen atom such as a fluorine atom, a chlorine atom, a bromine atom, or an iodine atom, a substituent containing a nitrogen atom, a substituent containing a phosphorus atom, an aromatic ring, and a linear, branched, or cyclic alkyl group having from 3 to 10 carbon atoms.

As a monomer represented by Formula (II), a commercially available product or a synthesized product may be used. Specific examples of the monomer represented by Formula (II) available as a commercially available product include ethoxy diethylene glycol acrylate (manufactured by KYOEISHA CHEMICAL Co., LTD., trade name: LIGHT ACRYLATE EC-A), methoxytriethylene glycol acrylate (manufactured by KYOEISHA CHEMICAL Co., LTD., trade name: LIGHT ACRYLATE MTG-A and manufactured by Shin-Nakamura Chemical Co., Ltd., trade name: NK ESTER AM-30G), methoxy poly (n = 9) ethylene glycol acrylate (manufactured by KYOEISHA CHEMICAL Co., LTD., trade name: LIGHT ACRYLATE 130-A and manufactured by Shin-Nakamura Chemical Co., Ltd., trade name: NK ESTER AM-90G), methoxy poly (n = 13) ethylene glycol acrylate (manufactured by Shin-Nakamura Chemical Co., Ltd., trade name: NK ESTER AM-130G), methoxy poly (n = 23) ethylene glycol acrylate (manufactured by Shin-Nakamura Chemical Co., Ltd., trade name: NK ESTER AM-230G), octoxypoly (n = 18) ethylene glycol acrylate (manufactured by Shin-Nakamura Chemical Co., Ltd., trade name: NK ESTER A-OC-18E), phenoxy diethylene glycol acrylate (manufactured by KYOEISHA CHEMICAL Co., LTD., trade name: LIGHT ACRYLATE P-200A and manufactured by Shin-Nakamura Chemical Co., Ltd., trade name: NK ESTER AMP-20GY), phenoxypoly (n = 6) ethylene glycol acrylate (manufactured by Shin-Nakamura Chemical

Co., Ltd., trade name: NK ESTER AMP-60G), nonylphenol EO adduct (n = 4) acrylate (manufactured by KYOEISHA CHEMICAL Co., LTD., trade name: LIGHT ACRYLATE NP-4EA), nonylphenol EO adduct (n=8) acrylate (manufactured by KYOEISHA CHEMICAL Co., LTD., trade name: LIGHT ACRYLATE NP-8EA), methoxy diethylene glycol methacrylate (manufactured by KYOEISHA CHEMICAL Co., LTD., trade name: LIGHT ESTER MC and manufactured by Shin-Nakamura Chemical Co., Ltd., trade name: NK ESTER M-20G), methoxytriethylene glycol methacrylate (manufactured by KYOEISHA CHEMICAL Co., LTD., trade name: LIGHT ESTER MTG), methoxy poly (n = 9) ethylene glycol methacrylate (manufactured by KYOEISHA CHEMICAL Co., LTD., trade name: LIGHT ESTER 130MA and manufactured by Shin-Nakamura Chemical Co., Ltd., trade name: NK ESTER M-90G), methoxy poly (n = 23) ethylene glycol methacrylate (manufactured by Shin-Nakamura Chemical Co., Ltd., trade name: NK ESTER M-230G), and methoxy poly (n = 30) ethylene glycol methacrylate (manufactured by KYOEISHA CHEMICAL Co., LTD., trade name: LIGHT ESTER 041MA).

Among these, methoxytriethylene glycol acrylate ($R_1$ in Formula (II) is H, $R_2$ is $CH_3$, and n is 3) is more preferable from the viewpoint of reactivity and the like when copolymerizing with a nitrile group-containing monomer such as acrylonitrile. These monomers represented by Formula (II) may be used singly or in combination of two or more kinds thereof.

- Monomer Represented by Formula (III) -

From the viewpoint of plasticity of an electrode, the resin for an energy device electrode of the disclosure preferably further includes a structural unit derived from a monomer represented by Formula (III).

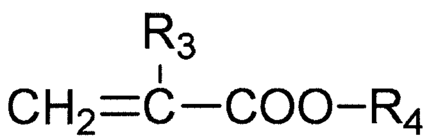

Formula (III)

Here, $R_3$ represents a hydrogen atom or a methyl group. $R_4$ represents an alkyl group having from 4 to 30 carbon atoms, preferably an alkyl group having from 5 to 25 carbon atoms, more preferably an alkyl group having from 6 to 20 carbon atoms, and still more preferably an alkyl group having from 8 to 16 carbon atoms. When the number of carbon atoms of the alkyl group represented by $R_4$ is 4 or more carbon atoms, sufficient flexibility tends to be obtained. When the number of carbon atoms of the alkyl group represented by $R_4$ is 30 or less, sufficient swelling resistance against an electrolytic solution tends to be obtained. In a case in which the alkyl group represented by $R_4$ has a substituent, the number of carbon atoms included in the substituent is not included in the number of carbon atoms of the alkyl group.

The alkyl group represented by $R_4$ may be linear, branched, or cyclic.

In the alkyl group represented by $R_4$, a part of hydrogen atoms may be substituted with a substituent. Examples of the substituent include a halogen atom such as a fluorine atom, a chlorine atom, a bromine atom, or an iodine atom, a substituent containing a nitrogen atom, a substituent containing a phosphorus atom, an aromatic ring, and a cycloalkyl group having from 3 to 10 carbon atoms. Examples of the alkyl group represented by $R_4$ include a linear, branched, or cyclic alkyl group, and a halogenated alkyl group such as a fluoroalkyl group, a chloroalkyl group, a bromoalkyl group, or an iodinated alkyl group.

As the monomer represented by Formula (III), a commercially available product or a synthesized product may be used. Specific examples of the monomer represented by Formula (III) available as a commercially available product include a long chain (meth)acrylate ester such as n-butyl (meth)acrylate, isobutyl (meth)acrylate, t-butyl (meth)acrylate, amyl (meth)acrylate, isoamyl (meth)acrylate, hexyl (meth)acrylate, heptyl (meth)acrylate, octyl (meth)acrylate, 2-ethylhexyl (meth)acrylate, nonyl (meth)acrylate, decyl (meth)acrylate, isodecyl (meth)acrylate, lauryl (meth)acrylate, tridecyl (meth)acrylate, hexadecyl (meth)acrylate, stearyl (meth)acrylate, isostearyl (meth)acrylate, cyclohexyl (meth)acrylate, or isobornyl (meth)acrylate.

When $R_4$ is a fluoro alkyl group, examples of the monomer include: an acrylate compound such as 1,1-bis(trifluoromethyl)-2,2,2-trifluoroethyl acrylate, 2,2,3,3,4,4,4-heptafluorobutyl acrylate, 2,2,3,4,4,4-hexafluorobutyl acrylate, nonafluoroisobutyl acrylate, 2,2,3,3,4,4,5,5-octafluoropentyl acrylate, 2,2,3,3,4,4,5,5,5-nonafluoropentyl acrylate, 2,2,3,3,4,4,5,5,6,6,6-undecafluorohexyl acrylate, 2,2,3,3,4,4,5,5,6,6,7,7,8,8,8-pentadecafluorooctyl acrylate, 3,3,4,4,5,5,6,6,7,7,8,8,9,9,10,10,10-heptadecafluorodecyl acrylate, or 2,2,3,3,4,4,5,5,6,6,7,7,8,8,9,9,10,10,10-nonadecafluorodecyl acrylate; and a methacrylate compound such as nonafluoro-t-butyl methacrylate, 2,2,3,3,4,4,4-heptafluorobutyl methacrylate, 2,2,3,3,4,4,5,5-octafluoropentyl methacrylate, 2,2,3,3,4,4,5,5,6,6,7,7-dodecafluoroheptyl methacrylate, heptadecafluorooctyl methacrylate, 2,2,3,3,4,4,5,5,6,6,7,7,8,8,8-pentadecafluorooctyl methacrylate, or 2,2,3,3,4,4,5,5,6,6,7,7,8,8,9,9-hexadecafluorononyl methacrylate.

These monomers represented by Formula (III) may be used singly, or in combination of two or more kinds thereof.

- Carboxy Group-Containing Monomer -

From the viewpoint of the adhesiveness between a current collector and a mixture layer, the resin for an energy device electrode of the disclosure may contain a carboxy group-containing structural unit derived from a carboxy group-containing monomer.

The carboxy group-containing monomer is not particularly limited, and examples thereof include an acrylic carboxy group-containing monomer such as an acrylic acid or a methacrylic acid, a crotonic carboxy group-containing monomer such as a crotonic acid, a maleic carboxy group-containing monomer such as a maleic acid and an anhydride thereof, an itaconic carboxy group-containing monomer such as an itaconic acid and an anhydride thereof, and a citraconic carboxyl group-containing monomer such as a citraconic acid and an anhydride thereof.

Among them, an acrylic acid is preferable from the viewpoint of ease of polymerization, cost performance, plasticity, flexibility, or the like of electrodes. The carboxy group-containing monomers may be used singly, or in combination of two or more kinds thereof. When, for the resin for an energy device electrode of the disclosure, an acrylic acid and methacrylic acid are used as a carboxy group-containing monomer, the content of the acrylic acid is, for example, preferably from 5% by mass to 95% by mass, more preferably from 50% by mass to 95% by mass, based on the total amount of the carboxy group-containing monomer.

- Other Monomers -

For the resin for an energy device electrode of the disclosure, in addition to a structural unit derived from a nitrile group-containing monomer, and, if necessary, a structural unit derived from a monomer represented by Formula (II), a structural unit derived from a monomer represented by Formula (III), and a carboxy group-containing structural unit derived from a carboxy group-containing monomer, a structural unit derived from another monomer different from such monomers can be further combined therewith if appropriate.

The other monomers are not particularly limited, and examples thereof include a short chain (meth)acrylate ester such as methyl (meth)acrylate, ethyl (meth)acrylate, or propyl (meth)acrylate; a vinyl halide such as vinyl chloride, vinyl bromide, or vinylidene chloride; maleic acid imide; phenyl maleimide; (meth)acrylamide; styrene; $\alpha$-methylstyrene, vinyl acetate; sodium (meth)allylsulfonate; sodium (meth)allyloxybenzenesulfonate; sodium styrenesulfonate; 2-acrylamido-2-methylpropanesulfonic acid; and a salt thereof. These other monomers may be used singly, or in combination of two or more kinds thereof.

- Ratio of Structural Unit Derived from Each Monomer -

When the resin for an energy device electrode of the disclosure contains at least one selected from the group consisting of a structural unit derived from a monomer represented by Formula (II), a structural unit derived from a monomer represented by Formula (III), and a carboxy group-containing structural unit derived from a carboxy group-containing monomer, the respective ratios of these structual units to 1 mole of a structural unit derived from a nitrile group-containing monomer are preferably the following molar ratios.

When the resin for an energy device electrode of the disclosure includes a structural unit derived from a monomer represented by Formula (II), the ratio of a structural unit derived from a monomer represented by Formula (II) to 1 mole of a structural unit derived from a nitrile group-containing monomer is preferably from 0.001 moles to 0.2 moles, more preferably from 0.003 moles to 0.05 moles, and still more preferably from 0.005 moles to 0.02 moles.

When the ratio of a structural unit derived from a monomer represented by Formula (II) to 1 mole of a structural unit derived from a nitrile group-containing monomer is in the range of from 0.001 moles to 0.2 moles, the adhesiveness to a positive electrode current collector, particularly a positive electrode current collector using an aluminum foil, and swelling resistance to an electrolytic solution are excellent, and the plasticity and flexibility of an electrode tend to be favorable.

When the resin for an energy device electrode of the disclosure includes a structural unit derived from a monomer represented by Formula (III), the ratio of a structural unit derived from a monomer represented by Formula (III) to 1 mole of a structural unit derived from a nitrile group-containing monomer is preferably from 0.001 moles to 0.2 moles, more preferably from 0.003 moles to 0.05 moles, and still more preferably from 0.005 moles to 0.02 moles.

When the ratio of a structural unit derived from a monomer represented by Formula (III) to 1 mole of a structural unit derived from a nitrile group-containing monomer is in the range of from 0.001 moles mole to 0.2 moles, the adhesiveness to a positive electrode current collector, particularly a positive electrode current collector using an aluminum foil, and swelling resistance to an electrolytic solution are excellent, and the plasticity and flexibility of an electrode tend to be favorable.

When the resin for an energy device electrode of the disclosure includes a carboxy group-containing structural unit derived from a carboxy group-containing monomer, the ratio of a carboxy group-containing structural unit derived

from a carboxy group-containing monomer to 1 mole of a structural unit derived from a nitrile group-containing monomer is preferably from 0.01 moles to 0.2 moles, more preferably from 0.02 moles to 0.1 mole, and still more preferably from 0.03 moles to 0.06 moles.

When the ratio of a carboxy group-containing structural unit derived from a carboxy group-containing monomer to 1 mole of a structural unit derived from a nitrile group-containing monomer is in the range of from 0.01 moles to 0.2 moles, the adhesiveness to a positive electrode current collector, particularly a positive electrode current collector using an aluminum foil, and swelling resistance to an electrolytic solution are excellent, and the plasticity and flexibility of an electrode tend to be favorable.

When the resin for an energy device electrode of the disclosure contains a structural unit derived from another monomer, the ratio of a structural unit derived from another monomer to 1 mole of a structural unit derived from a nitrile group-containing monomer is preferably from 0.005 moles to 0.1 moles, more preferably from 0.01 moles to 0.06 moles, and still more preferably from 0.03 moles to 0.05 moles.

The content of a structural unit derived from a nitrile group-containing monomer in the resin for an energy device electrode of the disclosure is preferably 80% by mole or more, and more preferably 90% by mole or more, based on the total amount of the resin for an energy device electrode including a structural unit derived from a nitrile group-containing monomer.

The resin for an energy device electrode of the disclosure may contain a structural unit derived from a crosslinking component for supplementing swell resistance to an electrolytic solution, a structural unit derived from a rubber component for supplementing the plasticity and flexibility of an electrode, and the like.

- Method of Manufacturing Resin for an Energy Device Electrode -

Examples of polymerization modes for synthesizing the resin for an energy device electrode of the disclosure include precipitation polymerization, bulk polymerization, suspension polymerization, emulsion polymerization, and solution polymerization, and there is no particular limitation. In-water precipitation polymerization is preferable from the viewpoint of ease of synthesis, ease of post-treatment such as collection or purification.

Hereinafter, the in-water precipitation polymerization will be described in detail.

(Polymerization Initiator)

A water-soluble polymerization initiator is preferable as a polymerization initiator for performing in-water precipitation polymerization from the viewpoint of polymerization initiation efficiency or the like.

Examples of the water-soluble polymerization initiator include a persulfate such as ammonium persulfate, potassium persulfate, or sodium persulfate, a water-soluble peroxide such as hydrogen peroxide, a water-soluble azo compound such as 2,2'-azobis(2-methylpropionamidine hydrochloride), and an oxidation-reduction type (redox type) in which an oxidizing agent such as persulfate, a reducing agent such as sodium bisulfite, ammonium bisulfite, sodium thiosulfate, or hydrosulfite, and a polymerization accelerator such as a sulfuric acid, iron sulfate, or copper sulfate are combined.

Among these, a persulfate, a water-soluble azo compound, or the like is preferable from the viewpoint of ease of resin synthesis or the like. Among persulfates, ammonium persulfate is particularly preferable.

When acrylonitrile is selected as the nitrile group-containing monomer, acrylic acid is selected as the carboxy group-containing monomer, and methoxytriethylene glycol acrylate is selected as the monomer represented by Formula (II) to conduct in-water precipitation polymerization, a water-soluble polymerization initiator effectively acts and polymerization starts smoothly since any of the monomers is water-soluble in the monomer state. As polymerization proceeds, polymer precipitates, as a result of which the reaction system becomes suspended, and eventually a resin for an energy device electrode with less unreacted material can be obtained in high yield.

The polymerization initiator is preferably used in the range of, for example, from 0.001% by mole to 5% by mole with respect to the total amount of the monomers used for synthesizing the resin for an energy device electrode, and more preferably in the range of from 0.01% by mole to 2% by mole.

(Chain Transfer Agent)

In carrying out in-water precipitation polymerization, a chain transfer agent may be used for the purpose of controlling the molecular weight or the like. Examples of the chain transfer agent include a mercaptan compound such as thioglycol, carbon tetrachloride, or α-methylstyrene dimer. Among them, α-methylstyrene dimer is preferable in view of less odor or the like.

(Solvent)

When carrying out in-water precipitation polymerization, a solvent other than water may be added, if necessary, in order to control the particle size of the precipitated resin or the like.
Examples of solvents other than water include: an amide such as N-methyl-2-pyrrolidone, N,N-dimethylacetamide, or N,N-dimethylformamide; a urea such as N,N-dimethyl ethylene urea, N,N-dimethyl propylene urea, or tetramethyl urea; a lactone such as γ-butyrolactone or γ-caprolactone; a carbonate such as propylene carbonate; a ketone such as acetone, methyl ethyl ketone, methyl isobutyl ketone, or cyclohexanone; an ester such as methyl acetate, ethyl acetate, n-butyl acetate, butyl cellosolve acetate, butyl carbitol acetate, ethyl cellosolve acetate, or ethyl carbitol acetate; a glyme such as diglyme, triglyme, or tetraglyme; a hydrocarbon such as toluene, xylene, or cyclohexane; a sulfoxide such as dimethylsulfoxide; a sulfone such as sulfolane; and an alcohol such as methanol, isopropanol, or n-butanol. These solvents may be used singly, or in combination of two or more kind thereof.

(Polymerization Method)

In-water precipitation polymerization is carried out, for example, by introducing a nitrile group-containing monomer and a carboxy group-containing monomer, a monomer represented by Formula (II), a monomer represented by Formula (III), and other monomers, if necessary, into a solvent, setting the polymerization temperature to preferably from 0°C to 100°C, more preferably from 30°C to 95°C, and maintaining the polymerization temperature preferably for from 1 hour to 50 hours, and more preferably for from 2 hours to 12 hours.
When the polymerization temperature is 0°C or higher, a polymerization reaction tends to be promoted. When the polymerization temperature is 100°C or less, even when water is used as a solvent, it becomes less likely for a state in which the water evaporates and polymerization cannot be carried out to occur.
The weight average molecular weight of the resin for an energy device electrode of the disclosure is preferably from 10,000 to 1,000,000, more preferably from 100,000 to 800,000, and still more preferably from 250,000 to 700,000.
In the disclosure, the weight average molecular weight refers to a value measured by the following method.
An object to be measured is dissolved in N-methyl-2-pyrrolidone, and an insoluble matter is removed through a filter made of PTFE (polytetrafluoroethylene) (for pretreatment of HPLC (High Performance Liquid Chromatography), manufactured by KURABO INDUSTRIES LTD., CHROMATODISK, model number: 13N, pore size: 0.45 μm]. The weight average molecular weight is measured using GPC [pump: L6200 Pump (manufactured by Hitachi, Ltd.), detector: Differential refractive index detector L3300 RI Monitor (manufactured by Hitachi, Ltd.), column: TSKgel-G5000HXL and TSKgel-G2000HXL (Total of 2) (both manufactured by Tosoh Corporation) are connected in series, column temperature: 30°C, eluent: N-methyl-2-pyrrolidone, flow rate: 1.0 mL/min, standard substance: polystyrene].
The acid value of the resin for an energy device electrode of the disclosure is preferably from 0 mgKOH/g to 40 mgKOH/g, more preferably from 0 mgKOH/g to 10 mgKOH/g, and more preferably from 0 mgKOH/g to 5 mg KOH/g.
In the disclosure, an acid value refers to a value measured by the following method.
First, after precisely weighing 1 g of an object to be measured, 30 g of acetone is added to the object to be measured to dissolve the object to be measured. Next, an appropriate amount of phenolphthalein as an indicator is added to a solution to be measured and titration is carried out using 0.1 N aqueous KOH solution. An acid value is then calculated from a result of the titration by the following Formula (A) (In Formula, Vf represents the titration amount (mL) of phenolphthalein, Wp represents the mass (g) of the solution to be measured, and I represents the proportion (% by mass) of the nonvolatile content of the solution to be measured).

$$\text{acid value (mgKOH/g)} = 10 \times \text{Vf} \times 56.1/(\text{Wp} \times \text{I}) \quad \text{(A)}$$

Approximately 1 mL of the solution to be measured is weighed out in an aluminum pan and dried on a hot plate heated to 160°C for 15 minutes, and the nonvolatile content of the solution to be measured is calculated from the residual material quantity.
When the nitrile group-containing monomer and a carboxy group-containing monomer, a monomer represented by Formula (II), a monomer represented by Formula (III) and other monomers used as necessary are polymerized, since the heat of polymerization of the nitrile group-containing monomer and optionally the carboxy group-containing monomer is particularly large, it is preferable to carry out polymerization while adding dropwise these monomers into a solvent.
The resin for an energy device electrode of the disclosure is produced, for example, by polymerization as described above, and is usually used in the form of a varnish dissolved in a solvent. A solvent used for preparing a varnish-like resin for an energy device electrode is not particularly limited, and for example, water and a solvent which can be added at the time of carrying out the above-described in-water precipitation polymerization can be used. Among

them, amides, ureas or lactones are preferable in view of solubility of the resin for an energy device electrode of the disclosure and the like, among which N-methyl-2-pyrrolidone or γ-butyrolactone is more preferable. These solvents may be used singly, or in combination of two or more kinds thereof.

The amount of the solvent to be used is not particularly limited as long as the amount is at least the minimum necessary amount at which the resin for an energy device electrode of the disclosure can maintain a dissolved state at room temperature. In a slurry preparation process in the preparation of an electrode of an energy device to be described later, since the viscosity of the slurry is usually adjusted while adding a solvent, it is preferable to set the amount to an arbitrary amount that does not cause too much dilution.

< Composition for Forming an Energy Device Electrode >

The composition for forming an energy device electrode of the disclosure contains: a positive electrode active material containing a lithium-containing metal composite oxide including lithium and nickel in which a content ratio of nickel with respect to metals other than lithium is 50% by mole or more; and a resin for an energy device electrode including a structural unit derived from a nitrile group-containing monomer.

Each component contained in the composition for forming an energy device electrode of the disclosure will be described below. The resin for an energy device electrode included in the composition for forming an energy device electrode of the disclosure is not particularly limited as long as the resin contains a structural unit derived from a nitrile group-containing monomer. As the resin for an energy device electrode, the resin for an energy device electrode of the disclosure can be used. Preferred embodiments of the resin for an energy device electrode of the disclosure included in the composition for forming an energy device electrode of the disclosure are as described above.

- Positive Electrode Active Material -

A positive electrode active material contained in the composition for forming an energy device electrode of the disclosure contains a lithium-containing metal composite oxide including lithium and nickel in which a content ratio of nickel with respect to metals other than lithium is 50% by mole or more. By using a lithium-containing metal composite oxide including lithium and nickel in which a content ratio of nickel with respect to metals other than lithium is 50% by mole or more (hereinafter, sometimes referred to as specific metal oxide) as the positive electrode active material, the energy density of a lithium ion secondary battery can be improved.

By combining a specific metal oxide and a resin for an energy device electrode including a structural unit derived from a nitrile group-containing monomer, gelation of a slurry containing the composition for forming an energy device electrode of the disclosure can be suppressed.

In particular, in order to increase the charge/discharge capacity per unit weight of the positive electrode active material when a specific metal oxide is used as a positive electrode active material so as to obtain a high capacity positive electrode for an energy device, it is preferable that the specific metal oxide contains a compound represented by the following Formula (I).

$$Li_aNi_bCo_cM_dO_{2+e} \qquad \text{Formula (I)}$$

wherein, in Formula (I), M is at least one selected from the group consisting of Al, Mn, Mg, and Ca, and a, b, c, d, and e satisfy $0.2 \le a \le 1.2$, $0.5 \le b \le 0.9$, $0.1 \le c \le 0.4$, $0 \le d \le 0.2$, $-0.2 \le e \le 0.2$, and $b + c + d = 1$.

Since in a compound represented by Formula (I), as the proportion of Ni increases, the capacity density of the positive electrode active material increases, and as the proportion of Ni decreases, the thermodynamic stability of the positive electrode active material tends to increase, the ratio (b) of Ni is preferably $0.5 \le b \le 0.9$, more preferably $0.55 \le b \le 0.85$, and still more preferably $0.6 \le b \le 0.8$.

Since as the proportion of Co increases, the discharge performance of the positive electrode active material improves, and as the ratio of Co decreases, the capacity density of the positive electrode active material tends to increase, the ratio (c) of Co is preferably $0.1 \le c \le 0.4$.

As M in Formula (I), it is possible to contain at least one element selected from the group consisting of Al, Mn, Mg, and Ca. There is a tendency that, by including such an element, it becomes possible to enhance the thermodynamic stability of the positive electrode active material and to suppress a resistance rise caused by nickel entering a lithium site. On the other hand, as the ratio of M is smaller, the capacity density of the positive electrode active material tends to increase. From such a viewpoint, the ratio (d) of M is preferably $0 \le d \le 0.2$.

The compound represented by Formula (I) can be prepared by a method commonly used in the field of energy devices. An example of preparation will be described below.

First, a metal salt solution of a metal to be introduced into a compound represented by Formula (I) is prepared. As the metal salt, those commonly used in the field of energy devices can be used, examples thereof include a sulfate,

a chloride salt, a nitrate, and an acetate.

Among these, a nitrate is preferable in view of the fact that oxidation of the metal in the fired raw material is easily promoted since the nitrate functions as an oxidizing agent in a subsequent firing process, and the fact that it is less likely for the nitrate to remain in the compound represented by Formula (I) since the nitrate is volatilized by firing. The molar ratio of each metal contained in the metal salt solution is preferably made equal to the molar ratio of each metal of the compound represented by Formula (I) to be prepared.

Next, a lithium source is suspended in pure water. As the lithium source, those commonly used in the field of energy devices can be used, and examples thereof include lithium carbonate, lithium nitrate, lithium hydroxide, lithium acetate, alkyl lithium, fatty acid lithium, and halogen lithium. Thereafter, the metal salt solution of the metal is added to prepare a lithium salt solution slurry. At this time, fine particle lithium-containing carbonate precipitates in the slurry. The average particle size of the lithium-containing carbonate in the slurry can be adjusted by the shear rate of the slurry. The precipitated lithium-containing carbonate is separated by filtration and then dried to obtain a precursor of the compound represented by Formula (I).

The obtained lithium-containing carbonate is filled in a firing vessel and fired in a firing furnace. The firing is preferably carried out in an oxygen-containing atmosphere, preferably under an oxygen atmosphere for a predetermined time. Further, the firing is preferably carried out under a pressure of from 101 kPa to 202 kPa. The amount of oxygen in the composition can be increased by heating under pressure. The calcining temperature is preferably at a temperature of from 850°C to 1200°C, more preferably at a temperature of from 850°C to 1,100°C, and even more preferably at a temperature of from 850°C to 1,000°C. When fired in such a temperature range, the crystallinity of the compound represented by Formula (I) tends to be improved.

In the composition for forming an energy device electrode of the disclosure, as the positive electrode active material, another positive electrode active material other than a specific metal oxide commonly used in the field of energy devices can be used in combination. Examples of the other commonly used positive electrode active material include $LiCoO_2$, $LiNiO_2$, $LiMnO_2$, $LiNi_{1/3}Mn_{1/3}Co_{1/3}O_2$, and $LiMn_2O_4$.

When the composition for forming an energy device electrode of the disclosure uses another positive electrode active material in combination, the proportion of the specific metal oxide in the positive electrode active material is preferably 50% by mass or more, more preferably 70% by mass or more, and still more preferably 90% by mass or more.

The other positive electrode active materials can be arbitrarily selected according to characteristics such as the energy device capacity, input/output characteristics, cycle life, voltage, safety, and the like as desired.

The positive electrode active material may be used singly, or in combination of two or more kinds thereof.

- Conductive Material -

From the viewpoint of reducing the resistance of an electrode, the composition for forming an energy device electrode of the disclosure may include a conductive material. As the conductive material, those commonly used in the field of energy devices can be used. Specific examples thereof include carbon black, graphite, carbon fiber, and metal fiber. Examples of the carbon black include acetylene black, Ketjen black, channel black, furnace black, lamp black, and thermal black. Examples of graphite include natural graphite and artificial graphite. The conductive materials may be used singly, or in combination of two or more kinds thereof.

- Solvent -

When the composition for forming an energy device electrode of the disclosure is used as a slurry for forming an electrode, the composition for forming an energy device electrode may contain a solvent.

The solvent used for the slurry is not particularly limited and may be a solvent capable of uniformly dissolving or dispersing the resin for an energy device electrode of the disclosure. As such a solvent, a solvent used for dissolving the resin for an energy device electrode of the disclosure to prepare a resin solution is often used as it is, and for example, N-methyl-2-pyrrolidone and $\gamma$-butyrolactone are preferred. These solvents may be used singly, or in combination of two or more kinds thereof.

- Other Additives -

Various additives such as a crosslinking component for supplementing the swelling resistance to an electrolytic solution, a rubber component for supplementing the plasticity and flexibility of an electrode, an antisettling agent for improving electrode coatability of a slurry, an anti-foaming agent, or a leveling agent may be added to the composition for forming an energy device electrode of the disclosure as necessary.

When the composition for forming an energy device electrode of the disclosure is used as a slurry for forming electrodes, the slurry may contain a thickener in order to improve dispersion stability and coatability of the slurry. Examples

of the thickener include a polyacrylic acid and a polyacrylic acid derivative such as an alkali metal salt thereof; ethylene-(meth)acrylic acid copolymer, polyvinyl alcohol, and a polyvinyl alcohol copolymer such as ethylene-vinyl alcohol copolymer.

Here, in the case of an N-methyl-2-pyrrolidone (NMP) solution to which 10% by mass of a resin for an energy device electrode based on the total amount was added, the suitable viscosity to be adjusted in a slurry preparation process is preferably from 500 mPa·s to 50,000 mPa·s, more preferably from 1,000 mPa·s to 20,000 mPa·s, and still more preferably from 2,000 mPa·s to 10,000 mPa·s at 25°C.

The viscosity is measured at 25°C and a shear rate of 1.0 $s^{-1}$ using a rotary shear viscometer.

< Positive Electrode for Energy Device >

The positive electrode for an energy device of the disclosure (hereinafter sometimes simply referred to as a positive electrode) includes a positive electrode current collector and a positive electrode mixture layer provided on at least one surface of the positive electrode current collector and including the composition for forming an energy device electrode of the disclosure.

The positive electrode for an energy device of the disclosure can be manufactured by using a known electrode manufacturing method without particular limitation. For example, the positive electrode can be produced by applying a positive electrode slurry containing the active material, the resin for an energy device electrode, and a conductive material and a solvent used as necessary on at least one surface of a positive electrode current collector, removing the solvent by drying, and rolling as necessary to form a positive electrode mixture layer on the surface of a positive electrode current collector.

Application of the positive electrode slurry can be carried out using, for example, a comma coater. The application of the slurry is suitably performed in such a manner that the ratio of the positive electrode capacity and the negative electrode capacity (negative electrode capacity/positive electrode capacity) of the opposed electrodes is 1 or more. The coating amount of the positive electrode slurry is, for example, preferably, as the dry mass of the positive electrode mixture layer, from 5 g/$m^2$ to 500 g/$m^2$, more preferably from 50 g/$m^2$ to 300 g/$m^2$, and still more preferably from 100 g/$m^2$ to 200 g/$m^2$. The larger the coating amount, the easier it is to obtain a lithium ion secondary battery having a larger capacity, and the smaller the coating amount, the easier it is to obtain a lithium ion secondary battery with higher output.

Removal of the solvent is carried out, for example, preferably by drying at from 50°C to 150°C, more preferably from 80°C to 120°C for preferably from 1 minute to 20 minutes, more preferably from 3 minutes to 10 minutes.

Rolling is carried out, for example, using a roll press machine. The bulk density of the positive electrode mixture layer is preferably, for example, from 2 g/$cm^3$ to 5 g/$cm^3$, and more preferably from 2.5 g/$cm^3$ to 4 g/$cm^3$. Further, for example, the layer may be vacuum dried at from 100°C to 150°C for from 1 hour to 20 hours in order to remove residual solvent and adsorbed water in the positive electrode.

As the positive electrode current collector, those commonly used in the field of energy devices can be used. Specific examples thereof include a sheet and a foil containing stainless steel, aluminum, titanium, or the like. Among these, from the viewpoint of electrochemical viewpoint and cost, aluminum sheet or foil is preferable.

The thickness of the sheet and the foil is not particularly limited, and is, for example, preferably from 1 μm to 500 μm, more preferably from 2 μm to 100 μm, and still more preferably from 5 μm to 50 μm.

< Energy Device >

The energy device of the disclosure includes the positive electrode for an energy device of the disclosure.

Examples of the energy device of the disclosure include a lithium ion secondary battery, an electric double layer capacitor, a solar cell, and a fuel cell.

A lithium ion secondary battery which is an example of the energy device of the disclosure can be obtained by combining the positive electrode for an energy device of the disclosure, the negative electrode for an energy device, and the nonaqueous electrolytic solution.

The energy device of the disclosure is preferably applied to a nonaqueous electrolytic solution-based energy device. Nonaqueous electrolytic solution-based energy device refers to an electric storage or power generation device (apparatus) using an electrolytic solution other than water.

Hereinafter, a case in which the energy device of the disclosure is applied to a lithium ion secondary battery will be described as an example.

The lithium ion secondary battery includes, for example, a positive electrode, a negative electrode, a separator interposed between the positive electrode and the negative electrode, and an electrolytic solution.

- Negative Electrode for an Energy Device -

A negative electrode for an energy device (hereinafter sometimes simply referred to as a negative electrode) includes a negative electrode current collector and a negative electrode mixture layer provided on at least one surface of the negative electrode current collector. The negative electrode mixture layer has a negative electrode active material, a binder resin, and, if necessary, a conductive material.

As the negative electrode active material, those commonly used in the field of energy devices can be used. Specific examples thereof include metallic lithium, a lithium alloy, a metal compound, a carbon material, a metal complex, and an organic polymer compound. The negative electrode active material may be used singly, or in combination of two or more kinds thereof.

Among them, a carbon material is preferable as the negative electrode active material. Examples of the carbon material include: graphite such as natural graphite (scaly graphite or the like), artificial graphite; carbon black such as acetylene black, Ketjen black, channel black, furnace black, lamp black, or thermal black; amorphous carbon; and carbon fiber.

The average particle size of the carbon material is preferably from 0.1 μm to 60 μm, more preferably from 0.3 μm to 45 μm, and still more preferably from 0.5 μm to 30 μm.

The BET specific surface area of the carbon material is preferably from 1 $m^2$/g to 10 $m^2$/g.

Among carbon materials, in particular, from the viewpoint of further improving the discharge capacity of the lithium ion secondary battery, graphite having an interval ($d_{002}$) of carbon hexagonal planes in the X-ray wide angle diffraction method of from 3.35 Å to 3.40 Å and a crystallite (Lc) in the c-axis direction of 100 Å or more is preferable.

On the other hand, among carbon materials, in particular, from the viewpoint of further improving cycle characteristics and safety, amorphous carbon having an interval ($d_{002}$) of carbon hexagonal planes in the X-ray wide angle diffraction method of from 3.50 Å to 3.95 Å is preferable.

Herein, the average particle size is defined as the 50% integration value (median diameter (D50)) from the small diameter side of a volume-based particle size distribution of a sample dispersed in purified water containing a surfactant measured by a laser diffraction-type particle size distribution measuring apparatus (for example, SALD-3000J manufactured by Shimadzu Corporation).

The BET specific surface area can be measured, for example, from the nitrogen adsorption ability in accordance with JIS Z 8830: 2013. As an evaluation device, for example, AUTOSORB-1 (trade name) manufactured by Quantachrome Corporation can be used. Since it is considered that water adsorbed in the sample surface and the structure influences the gas adsorption ability, when measuring the BET specific surface area, it is preferable to perform pretreatment for removal of moisture by heating first.

In the pretreatment, after reducing the pressure of a measurement cell to which 0.05 g measurement sample has been input to 10 Pa or less with a vacuum pump, the cell is heated at 110°C and kept for 3 hours or longer, then naturally cooled to room temperature (25°C) while maintaining the reduced pressure state. After this pretreatment, measurement is carried out at an evaluation temperature of 77 K and the evaluation pressure range is less than 1 at relative pressure (equilibrium pressure with respect to saturated vapor pressure).

The surface interval $d_{002}$ of the 002 surface of the carbon material can be calculated using the Bragg's equation, from a diffraction peak corresponding to the carbon 002 plane appearing in the vicinity of the diffraction angle $2\theta$ = 24° to 26° of a diffraction profile obtained by measuring a diffraction line with a goniometer by irradiating the sample with X rays (CuKα rays).

As the negative electrode current collector used for a negative electrode for an energy device, those commonly used in the field of energy devices can be used. Specific examples thereof include a sheet and a foil containing stainless steel, nickel, copper, or the like. The average thickness of the sheet and the foil is not particularly limited, and is, for example, preferably from 1 μm to 500 μm, more preferably from 2 μm to 100 μm, and still more preferably from 5 μm to 50 μm.

In the negative electrode for an energy device, from the viewpoint of reducing the resistance of an electrode, a conductive material may be used. As the conductive material, those commonly used in the field of energy devices can be used. Specific examples thereof include carbon black, graphite, carbon fiber, and metal fiber. Examples of the carbon black include acetylene black, Ketjen black, channel black, furnace black, lamp black and thermal black. Examples of graphite include natural graphite and artificial graphite. The conductive materials may be used singly, or in combination of two or more kinds thereof.

As a binder resin used for a negative electrode for an energy device, those commonly used in the field of energy devices can be used. Specific examples thereof include polytetrafluoroethylene, polyvinylidene fluoride, styrene butadiene rubber, and acrylic rubber. Among these binder resins, styrene butadiene rubber and acrylic rubber are particularly preferable from the viewpoint of further improving the characteristics of the lithium ion secondary battery.

The negative electrode for an energy device can be manufactured by using a known electrode manufacturing method without particular limitation. For example, a slurry (negative electrode slurry) containing a negative electrode

active material, a binder resin, and a conductive material and a solvent used as necessary is applied on at least one surface of a negative electrode current collector, then the solvent is removed by drying, and if necessary, rolled to form a negative electrode mixture layer on the surface of the negative electrode current collector, whereby the negative electrode can be produced.

The solvent used for the negative electrode slurry is not particularly limited and may be a solvent capable of uniformly dissolving or dispersing the binder resin. When styrene butadiene rubber is used as the binder resin, water widely used as a dispersion medium of the binder resin is preferable. The solvents may be used singly, or in combination of two or more kinds thereof.

A thickener may be added to the negative electrode slurry for preparing the negative electrode mixture layer in order to improve dispersion stability and coatability of the negative electrode slurry. Examples of the thickener include a carboxymethyl cellulose derivative such as carboxymethyl cellulose or carboxymethyl cellulose sodium, polyvinyl alcohol, polyvinyl pyrrolidone, water-soluble alginic acid derivatives, gelatin, carrageenan, glucomannan, pectin, curdlan, gellan gum, a polyacrylic acid derivative such as polyacrylic acid or an alkali metal salt thereof, ethylene-(meth)acrylic acid copolymer, and a polyvinyl alcohol copolymer such as polyvinyl alcohol, or ethylene-vinyl alcohol copolymer. Among these, a carboxymethyl cellulose derivative is preferable.

Application of the negative electrode slurry can be carried out using a comma coater. The application of the slurry is suitably performed in such a manner that the ratio of the positive electrode capacity and the negative electrode capacity (negative electrode capacity/positive electrode capacity) of the opposed electrodes is 1 or more. The coating amount of the negative electrode slurry is, for example, preferably, as the dry mass of the negative electrode mixture layer, from 5 $g/m^2$ to 300 $g/m^2$, more preferably from 25 $g/m^2$ to 200 $g/m^2$, and still more preferably from 50 $g/m^2$ to 150 $g/m^2$. The larger the coating amount, the easier it is to obtain a lithium ion secondary battery having a larger capacity, and the smaller the coating amount, the easier it is to obtain a lithium ion secondary battery with higher output.

Removal of the solvent is carried out, for example, preferably by drying at from 50°C to 150°C, more preferably from 80°C to 120°C for preferably from 1 minute to 20 minutes, more preferably from 3 minutes to 10 minutes.

Rolling is carried out, for example, using a roll press machine. The bulk density of the negative electrode mixture layer is preferably, for example, from 1 $g/cm^3$ to 2 $g/cm^3$, more preferably from 1.2 $g/cm^3$ to 1.8 $g/cm^3$, and still more preferably from 1.4 $g/cm^3$ to 1.6 $g/cm^3$. Further, for example, the layer may be vacuum dried at from 100°C to 150°C for from 1 hour to 20 hours in order to remove residual solvent and adsorbed water in the negative electrode.

- Separator -

A separator is not particularly limited as long as the separator has ion permeability while electronically insulating between the positive electrode and the negative electrode and has resistance to oxidation on the positive electrode side and resistance to reduction on the negative electrode side. As a material (a quality of material) of the separator satisfying such characteristics, a resin, an inorganic material, or the like is used.

As the resin, an olefin polymer, a fluorine polymer, a cellulose polymer, polyimide, nylon, or the like is used. Specifically, it is preferable to select from among materials that are stable to an electrolytic solution and excellent in liquid retaining property, and it is preferable to use a porous sheet, nonwoven fabric, or the like made of polyolefin such as polyethylene or polypropylene as a raw material.

As the inorganic substance, an oxide such as alumina or silicon dioxide, a nitride such as aluminum nitride or silicon nitride, a sulfate such as barium sulfate or calcium sulfate, or glass is used. For example, it is possible to use, as a separator, one obtained by adhering the above-described inorganic material in fiber shape or particle shape to a base material in thin film form such as nonwoven fabric, woven fabric, or microporous film.

As the base material having a thin film shape, one having an average pore diameter of from 0.01 $\mu m$ to 1 $\mu m$ and an average thickness of from 5 $\mu m$ to 50 $\mu m$ is preferably used. A composite porous layer obtained by using the inorganic material of fiber shape or particle shape with a binder such as resin can be used as a separator. Further, the composite porous layer may be formed on the surface of the positive electrode or the negative electrode to form a separator. For example, a composite porous layer in which alumina particles having a 90% diameter (D90) of less than 1 $\mu m$ is bound with a fluororesin as a binder may be formed on the surface of the positive electrode.

- Electrolytic Solution -

The electrolytic solution is not particularly limited as long as the solutioin can function, for example, as a lithium ion secondary battery which is an energy device. Examples of the electrolytic solution include a solution obtained by dissolving an electrolyte such as $LiClO_4$, $LiBF_4$, LiI, $LiPF_6$, $LiCF_3SO_3$, $LiCF_3CO_2$, $LiAsF_6$, $LiSbF_6$, $LiAlCl_4$, LiCl, LiBr, $LiB(C_2H_5)_4$, $LiCH_3SO_3$, $LiC_4F_9SO_3$, $Li(CF_3SO_2)_2N$, or $Li[(CO_2)_2]_2B$ in an organic solvent such as: a carbonate such as propylene carbonate, ethylene carbonate, butylene carbonate, dimethyl carbonate, diethyl carbonate, or methyl ethyl carbonate; a lactone such as $\gamma$-butyrolactone; an ether such as trimethoxymethane, 1,2-dimethoxyethane, diethyl ether,

2-ethoxyethane, tetrahydrofuran, or 2-methyltetrahydrofuran; a sulfoxide such as dimethylsulfoxide; an oxolane such as 1,3-dioxolane or 4-methyl-1,3-dioxolane; a nitrogen-containing compound such as acetonitrile, nitromethane, or N-methyl-2-pyrrolidone; an ester such as methyl formate, methyl acetate, butyl acetate, methyl propionate, ethyl propionate, or triester of phosphoric acid; a glyme such as diglyme, triglyme, tetraglyme; a ketone such as acetone, diethyl ketone, methyl ethyl ketone, or methyl isobutyl ketone; a sulfone such as sulfolane; an oxazolidinone such as 3-methyl-2-oxazolidinone; a sultone such as 1,3-propane sultone, 4-butane sultone, or naphthasultone. Among them, an electrolytic solution in which $LiPF_6$ is dissolved in carbonates is preferable.

The electrolytic solution is prepared, for example, by using an organic solvent and an electrolyte singly or in combination of two or more kinds thereof.

From the viewpoint of further improving the characteristics of the lithium ion secondary battery, it is preferable to contain vinylene carbonate (VC) in the electrolytic solution.

In the case of containing vinylene carbonate (VC), the content is preferably from 0.1% by mass to 2% by mass, and more preferably from 0.2% by mass to 1.5% by mass, based on the total amount of the electrolytic solution.

There are no particular restrictions on the method of producing a lithium ion secondary battery, and a known method can be used.

For example, firstly, two electrodes of a positive electrode and a negative electrode are wound via a separator made of a polyethylene microporous film. The obtained spiral wound group is inserted into a battery can, and the tab terminal welded to the current collector of the negative electrode in advance is welded to the bottom of the battery can. An electrolytic solution is injected into the obtained battery can and the tab terminal welded to the current collector of the positive electrode in advance is welded to a lid of the battery, the lid is disposed on the top of the battery can via an insulating gasket, and a portion where the lid and the battery can are in contact is caulked and sealed to obtain a lithium ion secondary battery.

EXAMPLES

Hereinafter, the invention will be described in further detail with reference to experimental examples, but the present invention is not limited by these examples.

< Preparation of Binder Resin >

(1) Preparation of Resin A

Into a 0.5 liter separable flask equipped with a stirrer, a thermometer, and a cooling tube, 397.2 g of purified water (manufactured by Wako Pure Chemical Industries, Ltd.) was added, the inside of the system was purged with nitrogen, and the temperature was raised to 72.0°C. After confirming that the water temperature in the system was 72.0°C, a solution of 347 mg of a polymerization initiator ammonium persulfate (manufactured by Wako Pure Chemical Industries, Ltd.) dissolved in 2.5 g of purified water was added to the system, and then stirred at 250 revolutions per minute (rpm). Subsequently, a monomer (42.8 g (0.80 mol) of a nitrile group-containing monomer acrylonitrile) was added dropwise to the system over 2 hours, and the mixture was allowed to react for 1 hour. Next, a solution in which 420 mg of the polymerization initiator ammonium persulfate (manufactured by Wako Pure Chemical Industries, Ltd.) was dissolved in 7.8 g of purified water was added to the system, and the mixture was allowed to react for 1 hour. Subsequently, the temperature in the system was raised to 92.0°C, and the mixture was allowed to react for 1 hour. Next, a solution in which 210 mg of a polymerization initiator ammonium persulfate (manufactured by Wako Pure Chemical Industries, Ltd.) was dissolved in 1.5 g of purified water was added to the system, and the mixture was allowed to react for 1 hour. During the above process, the interior of the system was maintained in a nitrogen atmosphere and stirring was continued at 250 rpm. After cooling to room temperature (25°C), the reaction solution was subjected to suction filtration, and the precipitated resin was separated by filtration. The filtered resin was washed with 1,000 g of purified water (manufactured by Wako Pure Chemical Industries, Ltd.). The washed resin was dried in a vacuum tube dryer set at 60°C and 150 Pa for 24 hours to obtain a resin A. 423 g of NMP was added to a 0.5 liter separable flask equipped with a stirrer, a thermometer, and a cooling tube, and after raising the temperature to 100 ± 5°C, 27 g of powder of the resin A was added and stirred at 300 rpm for 5 hours to prepare an NMP solution of the resin A.

The resin A had a weight average molecular weight of 432,000 and an acid value of 4.75 mg KOH/g.

(2) Preparation of Resin B

An NMP solution of a resin B was obtained in a similar manner to the resin A except that the monomer was changed to 41.4 g (0.78 mol) of an acrylonitrile (manufactured by Wako Pure Chemical Industries, Ltd.) as a nitrile group-containing monomer and 1.4 g (0.006 mol) of methoxytriethylene glycol acrylate (NK ESTER AM-30G, manufactured

by Shin-Nakamura Chemical Co., Ltd.) as the monomer represented by Formula (II). The weight average molecular weight of the resin B was 454,000 and the acid value was 4.75 mg KOH/g.

(3) Preparation of Resin C

An NMP solution of a resin C was obtained in a similar manner to the resin A except that the monomer was changed to 39.3 g (0.74 mol) of an acrylonitrile (manufactured by Wako Pure Chemical Industries, Ltd.) as a nitrile group-containing monomer, 1.4 g (0.006 mol) of methoxytriethylene glycol acrylate (NK ESTER AM-30G, manufactured by Shin-Nakamura Chemical Co., Ltd.) as the monomer represented by Formula (II), and 2.1 g (0.029 mol) of acrylic acid (manufactured by Wako Pure Chemical Industries, Ltd.) as the carboxy group-containing monomer. The weight average molecular weight of the resin C was 391,000 and the acid value was 37.4 mg KOH/g.

< Preparation of Positive Electrode Active Material >

(1) Preparation of Positive Electrode Active Material A

After 1,390 g of lithium carbonate was suspended in pure water, a metal salt solution was charged at 1.6 L/hour. The metal salt solution was prepared using hydrates of nitrates of nickel, cobalt, and aluminum. The proportion of nickel, cobalt, and aluminum contained in the metal salt solution was adjusted to Ni: Co : Al = 80% by mole: 15% by mole: 5% by mole in such a manner that the compound obtained as the positive electrode active material A was $LiNi_{0.8}Co_{0.15}Al_{0.05}O_2$.

By this treatment, fine particle lithium-containing carbonate was precipitated in the solution. This precipitate was washed twice with a saturated lithium carbonate solution and filtered off using a filter press. Subsequently, the precipitate was dried to obtain a lithium-containing carbonate as a precursor of the positive electrode active material.

Next, the obtained lithium-containing carbonate was placed in a firing furnace, heated to 850°C for 6 hours, heated and held for 2 hours, and then cooled to obtain an oxide. The obtained oxide was crushed to obtain a positive electrode active material A. Hereinafter, the positive electrode active material A is described as NCA.

(2) Preparation of Positive Electrode Active Material B

The metal salt solution was prepared using hydrates of nitrates of nickel, cobalt, and manganese. A positive electrode active material B was obtained in the same manner as the positive electrode active material A, except that the proportion of nickel, cobalt, and manganese contained in the metal salt solution was adjusted to Ni: Co : Mn = 60% by mole : 20% by mole: 20% by mole in such a manner that the compound obtained as the positive electrode active material B was $LiNi_{0.6}Co_{0.2}Mn_{0.2}O_2$. Hereinafter, the positive electrode active material B is described as NMC (622).

(3) Preparation of Positive Electrode Active Material C

The metal salt solution was prepared using hydrates of nitrates of nickel, cobalt, and manganese. A positive electrode active material C was obtained in the same manner as the positive electrode active material A, except that the proportion of nickel, cobalt, and manganese contained in the metal salt solution was adjusted to Ni : Co : Mn = 80% by mole : 10% by mole: 10% by mole in such a manner that the compound obtained as the positive electrode active material C was $LiNi_{0.8}Co_{0.1}Mn_{0.1}O_2$. Hereinafter, the positive electrode active material C is described as NMC (811).

(4) Preparation of Positive Electrode Active Material D

The metal salt solution was prepared using hydrates of nitrates of nickel, cobalt, and manganese. A positive electrode active material D was obtained in the same manner as the positive electrode active material A, except that the proportion of nickel, cobalt, and manganese contained in the metal salt solution was adjusted to Ni : Co : Mn = 33.3% by mole :33.3% by mole :33.3% by mole in such a manner that the compound obtained as the positive electrode active material D was $LiNi_{1/3}Co_{1/3}Mn_{1/3}O_2$. Hereinafter, the positive electrode active material D is described as NMC (111).

< Preparation of Positive Electrode Slurry >

(Example 1)

NCA, acetylene black (conductive material, Denka Black HS-100, manufactured by Denka Company Limited), and a resin A (binder resin) were mixed in such a manner that the solid content proportion was 94.0% by mass : 4.5%

by mass : 1.5% by mass, and NMP was added for viscosity adjustment to prepare a positive electrode slurry. The room temperature and humidity when preparing the positive electrode slurry were 25±1°C and 55±1%RH.

(Example 2)

A positive electrode slurry was prepared in a similar manner to Example 1 except that the binder resin was changed to the resin B.

(Example 3)

A positive electrode slurry was prepared in a similar manner to Example 1 except that the binder resin was changed to the resin C.

(Comparative Example 1)

A positive electrode slurry was prepared in a similar manner to Example 1 except that the binder resin was changed to PVDF.

(Example 4)

NMC (622), acetylene black (conductive material, Denka Black HS-100, manufactured by Denka Company Limited), and a resin A (binder resin) were mixed in such a manner that the solid content proportion was 94.0% by mass : 4.5% by mass : 1.5% by mass, and NMP was added for viscosity adjustment to prepare a positive electrode slurry. The room temperature and humidity when preparing the positive electrode slurry were 25±1°C and 50±5%RH.

(Example 5)

A positive electrode slurry was prepared in a similar manner to Example 4 except that the binder resin was changed to the resin B.

(Example 6)

A positive electrode slurry was prepared in a similar manner to Example 4 except that the binder resin was changed to the resin C.

(Comparative Example 2)

A positive electrode slurry was prepared in a similar manner to Example 4 except that the binder resin was changed to PVDF.

(Example 7)

NMC (811), acetylene black (conductive material: Denka Black HS-100, manufactured by Denka Company Limited), and a resin A (binder resin) were mixed in such a manner that the solid content proportion was 94.0% by mass : 4.5% by mass : 1.5% by mass, and NMP was added for viscosity adjustment to prepare a positive electrode slurry. The room temperature and humidity when preparing the positive electrode slurry were 25±1°C and 50±5%RH.

(Example 8)

A positive electrode slurry was prepared in a similar manner to Example 7 except that the binder resin was changed to the resin B.

(Example 9)

A positive electrode slurry was prepared in a similar manner to Example 7 except that the binder resin was changed to the resin C.

(Comparative Example 3)

A positive electrode slurry was prepared in a similar manner to Example 7 except that the binder resin was changed to PVDF.

(Reference Example 1)

NMC (111), acetylene black (conductive material, Denka Black HS-100, manufactured by Denka Company Limited), and a resin A (binder resin) were mixed in such a manner that the solid content proportion was 94.0% by mass : 4.5% by mass : 1.5% by mass, and NMP was added for viscosity adjustment to prepare a positive electrode slurry. The room temperature and humidity when preparing the positive electrode slurry were 25±1°C and 50±5%RH.

(Reference Example 2)

A positive electrode slurry was prepared in a similar manner to Reference Example 1 except that the binder resin was changed to the resin B.

(Reference Example 3)

A positive electrode slurry was prepared in a similar manner to Reference Example 1 except that the binder resin was changed to the resin C.

(Reference Example 4)

A positive electrode slurry was prepared in a similar manner to Reference Example 1 except that the binder resin was changed to PVDF.

< Evaluation of Positive Electrode Slurry >

(1) Presence or Absence of Gelation of Positive Electrode Slurry

The presence or absence of gelation of the prepared positive electrode slurry was determined based on the viscosity of the positive electrode slurry and whether or not dilution was possible. The viscosity of the prepared positive electrode slurry was measured using an E-type viscometer (manufactured by Toki Sangyo Co., Ltd., TV-35) under conditions of 25°C and 0.5 rpm. The positive electrode slurry which was too high to measure the viscosity of the positive electrode slurry and was difficult to dilute with NMP was determined as having gelation. The obtained results are shown in Table 1 and Table 2.

(2) Stability of Positive Electrode Slurry

20 g of the prepared positive electrode slurry was charged to a sample tube bottle made of glass (manufactured by AS ONE Corporation, 30 mL) to seal the bottle, stored with stirring at 50 rpm using a rotary mixer (MIXROTOR UMP-5R, manufactured by As One Corporation), the viscosities of the positive electrode slurry 1 day after the preparation, 2 days after the preparation, and 3 days after the preparation was measured under the conditions of 25°C and 0.5 rpm using E-type viscometer (manufactured by Toki Sangyo Co., Ltd., TV-35), and the viscosity change rate was measured according to Formula (IV). The positive electrode slurry with increased viscosity change rate or the positive electrode slurry confirmed to gel by the above criteria were determined to have low stability. The obtained results are shown in Table 1 and Table 2.

$$\text{viscosity change rate (\%)} = (\text{positive electrode slurry viscosity after storage} / \text{positive electrode slurry viscosity immediately after preparation}) \times 100 \quad \text{Formula (IV)}$$

[Table 1]

| Experimental example | | Example 1 | Example 2 | Example 3 | Comparative Example 1 | Example 4 | Example 5 | Example 6 | Comparative Example 2 |
|---|---|---|---|---|---|---|---|---|---|
| Positive electrode active material | NCA | Contained | Contained | Contained | Contained | | | | |
| | NMC (622) | | | | | Contained | Contained | Contained | Contained |
| | NMC (811) | | | | | | | | |
| | NMC (111) | | | | | | | | |
| Binder resin | Resin A | Contained | | | | Contained | | | |
| | Resin B | | Contained | | | | Contained | | |
| | Resin C | | | Contained | | | | Contained | |
| | PVDF | | | | Contained | | | | Contained |
| Presence or absence of gelation during slurrying | | Absence | Absence | Absence | Presence | Absence | Absence | Absence | Absence |
| Viscosity change rate (%) | 1 day after | 84 | 84 | 84 | Unmeasurable | 84 | 84 | 84 | 129 |
| | 2 days after | 67 | 67 | 67 | Unmeasurable | 67 | 67 | 67 | 147 |
| | 3 days after | 65 | 65 | 65 | Unmeasurable | 65 | 65 | 65 | 170 |

[Table 2]

| Experimental example | | Example 7 | Example 8 | Example 9 | Comparative Example 3 | Reference Example 1 | Reference Example 2 | Reference Example 3 | Reference Example 4 |
|---|---|---|---|---|---|---|---|---|---|
| Positive electrode active material | NCA | | | | | | | | |
| | NMC (622) | | | | | | | | |
| | NMC (811) | Contained | Contained | Contained | Contained | | | | |
| | NMC (111) | | | | | Contained | Contained | Contained | Contained |
| Binder resin | Resin A | Contained | | | | Contained | | | |
| | Resin B | | Contained | | | | Contained | | |
| | Resin C | | | Contained | | | | Contained | |
| | PVDF | | | | Contained | | | | Contained |
| Presence or absence of gelation during slurrying | | Absence | Absence | Absence | Presence | Absence | Absence | Absence | Absence |
| Viscosity change rate (%) | 1 day after | 84 | 84 | 84 | Unmeasurable | 84 | 84 | 84 | 79 |
| | 2 days after | 67 | 67 | 67 | Unmeasurable | 67 | 67 | 67 | 70 |
| | 3 days after | 65 | 65 | 65 | Unmeasurable | 65 | 65 | 65 | 66 |

From results of Examples 1 to 3, Examples 4 to 6, Examples 7 to 9, and Reference Examples 1 to 3, it was confirmed that when the resin A, the resin B, and the resin C were used as the binder resin, no increase in viscosity of the positive electrode slurry occurred regardless of the kind of the positive electrode active material, and favorable stability was exhibited. This is considered to be due to low reactivity of LiOH with a structural unit derived from a nitrile group-containing monomer which is a main component of the resin A, resin B, and resin C. From this, it was suggested that a resin for an energy device electrode including a structural unit derived from a nitrile group-containing monomer such as the resin A, the resin B, or the resin C is effective for suppressing gelation of a positive electrode slurry using NCA, NMC (622), and NMC (811).

On the other hand, although, when PVDF was used as a binder resin, favorable stability was obtained in Reference Example 4 in which NMC (111) was used as the positive electrode active material, in Comparative Examples 1 to 3 using NCA, NMC (622), and NMC (811) as the positive electrode active material, gelation or thickening of the positive electrode slurry was confirmed. This result is presumed to be due to denaturation of PVDF.

< Preparation of Lithium Ion Secondary Battery >

The positive electrode slurry obtained in Examples 1 to 9, Comparative Examples 1 to 3, and Reference Examples 1 to 4 was applied substantially uniformly and homogeneously to one side of an aluminum foil having a thickness of 20 μm which was a positive electrode current collector. Thereafter, the foil was subjected to a drying treatment, rolled by pressing to a predetermined density, and then cut into 35 mm × 40 mm to obtain a positive electrode. The density of the positive electrode mixture layer was 2.90 g/cm$^3$, and the coating amount of the positive electrode slurry was 150 g/m$^2$ as the dry mass of the positive electrode mixture layer.

The obtained positive electrode and metal Li polished on its surface were made to face each other with a separator interposed therebetween. Then, a collector tab wire was connected to each of the positive electrode and the metal Li to obtain an electrode group. The obtained electrode group was placed in a laminate, 1,000 μL of an electrolytic solution was injected, and vacuum seal was performed to obtain a laminate type cell. For the electrolytic solution, a solution prepared by adding 0.8% by mass of vinylene carbonate to ethylene carbonate/ethyl methyl carbonate/dimethyl carbonate = 2/2/3 mixed solution (volume ratio) containing 1.2 M $LiPF_6$ based on the total amount of the mixed solution was used. A separator made of polyethylene was used.

The above materials are those in which moisture was substantially removed as much as possible, and assembly of a lithium ion secondary battery was carried out in a dry room.

< Evaluation of Lithium Ion Secondary Battery (Discharge Capacity) >

Since the positive electrode slurry of Comparative Examples 1 to 3 gelled or thickened, a positive electrode was not obtained, and a lithium ion secondary battery was not obtained.

The obtained lithium ion secondary battery was placed in a thermostat set at 25°C, connected to a charge/discharge device (product name: TOSCAT-3200, manufactured by Toyo System Co., Ltd.), and the discharge capacity was measured under the following conditions.

Constant current constant voltage (CCCV) charging at 4.25 V and 0.1 C was performed (termination condition: 0.01 C), followed by constant current (CC) discharge to 2.7 V at 0.1 C. This charging/discharging was repeated three times, and the capacity obtained by the third discharging was regarded as discharge capacity (battery characteristics). C representing the current value means "current value (A) / battery capacity (Ah)". The obtained results are shown in Table 3 and Table 4. The unit of the battery characteristic (discharge capacity) is "mAh".

[Table 3]

| Experimental example | | Example 1 | Example 2 | Example 3 | Comparative Example 1 | Example 4 | Example 5 | Example 6 | Comparative Example 2 |
|---|---|---|---|---|---|---|---|---|---|
| Positive electrode active material | NCA | Contained | Contained | Contained | Contained | - | - | - | - |
| | NMC (622) | - | - | - | - | Contained | Contained | Contained | Contained |
| | NMC (811) | - | - | - | - | - | - | - | - |
| | NMC (111) | - | - | - | - | - | - | - | - |
| Binder resin | resin A | Contained | - | - | - | Contained | - | - | - |
| | resin B | - | Contained | - | - | - | Contained | - | - |
| | resin C | - | - | Contained | - | - | - | Contained | - |
| | PVDF | - | - | - | Contained | - | - | - | Contained |
| Battery property | | 37.4 | 37.4 | 35.8 | - | 30.7 | 30.7 | 30.7 | - |

[Table 4]

| Experimental example | | Example 7 | Example 8 | Example 9 | Comparative Example 3 | Reference Example 1 | Reference Example 2 | Reference Example 3 | Reference Example 4 |
|---|---|---|---|---|---|---|---|---|---|
| Positive electrode active material | NCA | - | - | - | - | - | - | - | - |
| | NMC (622) | - | - | - | - | - | - | - | - |
| | NMC (811) | Contained | Contained | Contained | Contained | | | | |
| | NMC (111) | - | - | - | - | Contained | Contained | Contained | Contained |
| Binder resin | resin A | Contained | - | - | - | Contained | - | - | - |
| | resin B | - | Contained | - | - | - | Contained | - | - |
| | resin C | - | - | Contained | - | - | - | Contained | - |
| | PVDF | - | - | - | Contained | - | - | - | Contained |
| Battery property | | 37.2 | 37.2 | 35.6 | - | 28.4 | 28.4 | 28.3 | 28.4 |

In Examples 1 to 9 using NCA, NMC (622) and NMC (811) as the lithium-containing metal composite oxide including lithium and nickel in which a content ratio of nickel with respect to metals other than lithium is 50% by mole or more, and using a binder resin containing a structural unit derived from a nitrile group-containing monomer, it was found that the discharge capacity was large in proportion to the ratio of nickel. On the other hand, in Comparative Examples 1 to 3 using NCA, NMC (622), NMC (811), and a binder resin not containing a structural unit derived from a nitrile group-containing monomer, gelation or thickening of the positive electrode slurry resulted in failure to obtain a lithium ion secondary battery. In Reference Examples 1 to 4 using NMC (111) as the lithium-containing metal composite oxide including lithium and nickel in which a content ratio of nickel with respect to metals other than lithium is less than 50% by mole, the discharge capacity was small.

From the above results, it was suggested that according to the disclosure, in the case of using a lithium-containing metal composite oxide including lithium and nickel in which a content ratio of nickel with respect to metals other than lithium is 50% by mole or more as a positive electrode active material having a high capacity density, it is possible to provide a resin for an energy device electrode capable of suppressing gelation of a positive electrode slurry.

All Documents, Patent Applications, and technical standards described herein are incorporated by reference herein to the same extent as if each of the Documents, Patent Applications, and technical standards had been specifically and individually indicated to be incorporated by reference.

## Claims

**1.** A composition for forming an energy device electrode, the composition comprising:

a positive electrode active material comprising a lithium-containing metal composite oxide comprising lithium and nickel in which a content ratio of nickel with respect to metals other than lithium is 50% by mole or more; and

a resin for an energy device electrode comprising a structural unit derived from a nitrile group-containing monomer.

**2.** The composition for forming an energy device electrode according to claim 1, wherein the lithium-containing metal composite oxide comprises a compound represented by the following Formula (I):

$$Li_aNi_bCo_cM_dO_{2+e} \quad \text{Formula (I)}$$

wherein, in Formula (I), M is at least one selected from the group consisting of Al, Mn, Mg, and Ca, and a, b, c, d, and e satisfy $0.2 \leq a \leq 1.2$, $0.5 \leq b \leq 0.9$, $0.1 \leq c \leq 0.4$,$0 \leq d \leq 0.2$, $-0.2 \leq e \leq 0.2$, and$b + c + d = 1$.

**3.** The composition for forming an energy device electrode according to claim 1 or 2, wherein the resin for an energy device electrode further comprises a structural unit derived from a monomer represented by the following Formula (II):

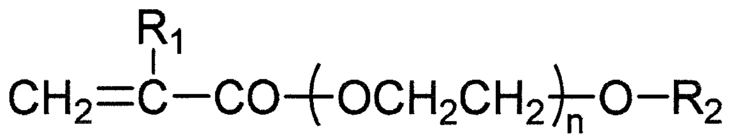

Formula (II)

wherein, in Formula (II), $R_1$ represents a hydrogen atom or a methyl group, $R_2$ represents a hydrogen atom or a monovalent hydrocarbon group, and n represents an integer from 1 to 50.

**4.** The composition for forming an energy device electrode according to claim 3, wherein a ratio of structural units derived from the monomer represented by the above-described Formula (II) with respect to 1 mole of the structural unit derived from the nitrile group-containing monomer contained in the resin for an energy device electrode is from 0.001 moles to 0.2 moles.

**5.** The composition for forming an energy device electrode according to any one of claims 1 to 4, wherein the resin for an energy device electrode further comprises a structural unit derived from a monomer represented by the following Formula (III):

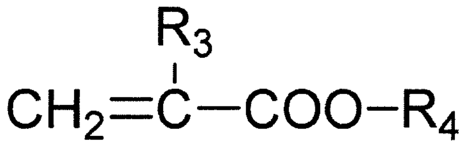 Formula (III)

wherein, in Formula (III), $R_3$ represents a hydrogen atom or a methyl group, and $R_4$ represents an alkyl group having from 4 to 30 carbon atoms.

6. The composition for forming an energy device electrode according to claim 5, wherein a ratio of structural units derived from the monomer represented by the above-described Formula (III) with respect to 1 mole of the structural unit derived from the nitrile group-containing monomer contained in the resin for an energy device electrode is from 0.001 moles to 0.2 moles.

7. The composition for forming an energy device electrode according to any one of claims 1 to 6, wherein the nitrile group-containing monomer comprises acrylonitrile.

8. A positive electrode for an energy device, comprising:

a positive electrode current collector; and
a positive electrode mixture layer provided on at least one surface of the positive electrode current collector and comprising the composition for forming an energy device electrode according to any one of claims 1 to 7.

9. An energy device comprising the positive electrode for an energy device according to claim 8.

10. The energy device according to claim 9, wherein the energy device is a lithium ion secondary battery.

11. A resin for an energy device electrode comprising a structural unit derived from a nitrile group-containing monomer, and used for forming a positive electrode mixture layer comprising a positive electrode active material comprising a lithium-containing metal composite oxide comprising lithium and nickel in which a content ratio of nickel with respect to metals other than lithium is 50% by mole or more.

12. The resin for an energy device electrode according to claim 11, wherein the lithium-containing metal composite oxide comprises a compound represented by the following Formula (I):

$$Li_aNi_bCo_cM_dO_{2+e} \qquad \text{Formula (I)}$$

wherein, in Formula (I), M is at least one selected from the group consisting of Al, Mn, Mg, and Ca, and a, b, c, d, and e satisfy $0.2 \leq a \leq 1.2$, $0.5 \leq b \leq 0.9$, $0.1 \leq c \leq 0.4, 0 \leq d \leq 0.2$, $-0.2 \leq e \leq 0.2$, and$b + c + d = 1$.

13. The resin for an energy device electrode according to claim 11 or 12, further comprising a structural unit derived from a monomer represented by the following Formula (II):

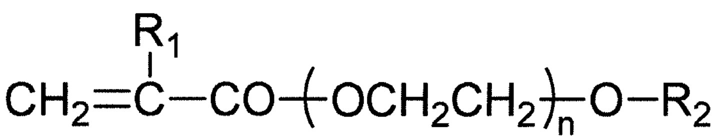 Formula (II)

wherein, in Formula (II), $R_1$ represents a hydrogen atom or a methyl group, $R_2$ represents a hydrogen atom or a monovalent hydrocarbon group, and n represents an integer from 1 to 50.

14. The resin for an energy device electrode according to claim 13, wherein a ratio of structural units derived from the monomer represented by the above-described Formula (II) with respect to I mole of the structural unit derived from the nitrile group-containing monomer is from 0.001 moles to 0.2 moles.

15. The resin for an energy device electrode according to any one of claims 11 to 14, further comprising a structural unit derived from a monomer represented by the following Formula (III):

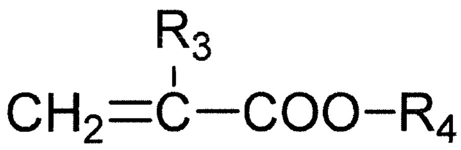

Formula (III)

wherein, in Formula (III), $R_3$ represents a hydrogen atom or a methyl group, and $R_4$ represents an alkyl group having from 4 to 30 carbon atoms.

**16.** The resin for an energy device electrode according to claim 15, wherein a ratio of structural units derived from the monomer represented by the above-described Formula (III) with respect to 1 mole of the structural unit derived from the nitrile group-containing monomer is from 0.001 moles to 0.2 moles.

**17.** The resin for an energy device electrode according to any one of claims 11 to 16, wherein the nitrile group-containing monomer comprises acrylonitrile.

**INTERNATIONAL SEARCH REPORT**

International application No. PCT/JP2016/079694

A. CLASSIFICATION OF SUBJECT MATTER
*H01M4/131*(2010.01)i, *H01M4/525*(2010.01)i, *H01M4/62*(2006.01)i

According to International Patent Classification (IPC) or to both national classification and IPC

B. FIELDS SEARCHED

Minimum documentation searched (classification system followed by classification symbols)
H01M4/131, H01M4/525, H01M4/62

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2012-89312 A (Hitachi Maxell Energy, Ltd.), 10 May 2012 (10.05.2012), claims 1 to 3, 6 to 10; paragraphs [0010], [0024]; examples & US 2012/0091403 A1 claims 1 to 3, 6 to 10; paragraphs [0012], [0054]; examples | 1,7-11,17<br>2-6,12-16 |
| X<br>Y | JP 2000-21407 A (Toshiba Corp.), 21 January 2000 (21.01.2000), claim 1; paragraphs [0028] to [0035]; examples (Family: none) | 1-2,7-12,17<br>2,12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>09 November 2016 (09.11.16) | Date of mailing of the international search report<br>22 November 2016 (22.11.16) |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

INTERNATIONAL SEARCH REPORT

International application No.
PCT/JP2016/079694

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2006/033173 A1 (Hitachi Chemical Co., Ltd.), 30 March 2006 (30.03.2006), claims 1 to 10; paragraph [0023]; examples & US 2008/0003506 A1 claims 1 to 10; paragraphs [0045] to [0048]; examples & CN 101023543 A & KR 10-2007-41785 A | 3-6,13-16 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008235147 A
- JP 4951823 B


### Non-patent literature cited in the description


- Various analyses of electrode binder. *The TRC News,* September 2013